# EUROPÄISCHE PATENTSCHRIFT

(11) **EP 3 877 596 B1**
(45) Veröffentlichungstag und Bekanntmachung des Hinweises auf die Patenterteilung: **02.11.2022**
(21) Anmeldenummer: 19828955.5
(22) Anmeldetag: 06.11.2019
(51) Int. Cl.: E03B 3/28, B01D 45/08, B01D 53/00, D03D 15/00

(54) **WASSER-GEWINNUNGS-MODUL, MODULARER WASSERKOLLEKTOR UND WASSERKOLLEKTOR-FELD**
WATER EXTRACTION MODULE, MODULAR WATER COLLECTOR AND WATER COLLECTOR FIELD
MODULE DE RÉCUPÉRATION D'EAU, COLLECTEUR D'EAU MODULAIRE ET CHAMP DE COLLECTEURS D'EAU

(30) Priorität: 08.11.2018 DE 102018008769
(43) Veröffentlichungstag der Anmeldung: 15.09.2021
(73) Patentinhaber: Tinnit Technologies GmbH, 76131 Karlsruhe (DE)
(72) Erfinder: KNEER, Aron, 76131 Karlsruhe (DE); WIRTZ, Michael, 76297 Stutensee (DE)
(74) Vertreter: mepat Patentanwälte
(86) Internationale Anmeldenummer: PCT/EP2019/000307
(87) Internationale Veröffentlichungsnummer: WO 2020/094248

(56) Entgegenhaltungen:
- DE-U1-202014 105 100
- ES-A1- 2 577 680
- "SCHWEBENDE QUELLEN", , 17. November 2014 (2014-11-17), Seiten 1-25, XP055242033, Gefunden im Internet: URL:http://www.leichtonline.com/uploads/fi les/FogHarvester271114.pdf [gefunden am 2016-01-15]

## Beschreibung

Die Erfindung betrifft ein Wasser-Gewinnungs-Modul zum Abscheiden und Sammeln von Wasser aus einem Aerosol in einem Luftstrom sowie einen modularen Wasserkollektor, der aus solchen Wasser-Gewinnungs-Modulen aufgebaut ist, und ein Wasserkollektor-Feld.

Selbst in wasserarmen Regionen der Welt kann unter bestimmten meteorologischen und geologischen Bedingungen bodennaher Nebel entstehen, der durch Winde bewegt wird. Aus dem Stand der Technik ist bekannt, dass aus einem solchen Nebel oder anderen Aerosolen Wassertropfen abgeschieden werden können. Durch Benetzungseffekte bleiben kleinere Tröpfchen an den Filamenten eines als Abscheideelement in den Aerosolstrom eingebrachten Gewirkes haften und agglomerieren dort zu größeren Tropfen, bis die Gravitationskraft die Haftreibung übersteigt und die Tropfen entlang der Filamente des Gewirkes in Gravitationsrichtung transportiert werden. Am bodennahen Ende des Gewirkes werden die Wassertropfen aufgefangen.

Die DE 10 2008 042 069 B4 beispielsweise beschreibt eine Vorrichtung zur Gewinnung von Wasser aus einem Aerosol, wobei eine von zwei textilen Schichten gebildete dreidimensionale Textilstruktur als Abscheideelement wirkt. Über eine Tragekonstruktion wird das Abscheideelement im Freien positioniert und das abgeschiedene Wasser am unteren Ende der Vorrichtung abgeleitet. Auch die Dokumente ""SCHWEBENDE QUELLEN", 17. November 2014 (2014-11-17), Seiten 1-25, XP055242033" und DE 20 2014 105100 U1 beschreiben eine solche Vorrichtung.

Bei der in US 2014/0311887 A1 offenbarten Vorrichtung kann der Rahmen eines ebenen Abscheideelements in der Höhe verstellt und rotiert werden, um ihn innerhalb des Nebels zu positionieren.

DE 10 2004 026 334 A1 schlägt vor, die Wasserabscheidung durch ein aufgebrachtes fließfähiges Adsorbens oder Absorbens zu fördern.

In US 2003/0145729 wird ein Netz, das ein superabsorbierendes Polymer aufweist, in einem Rahmen aufgehängt, und Feuchtigkeit in dem Polymer gesammelt und gespeichert, bis es durch einen externen Stimulus zur Abgabe des gesammelten Wassers angeregt wird.

In der DE 10 2010 003 953 A1 wird ebenfalls eine Vorrichtung aus einer Abscheidungsstruktur und einer Haltekonstruktion offenbart. Um die Stabilität zu erhöhen, sind dort die Träger der Haltekonstruktion flexibel, sodass sie bei hohen Windstärken aus der Strömungsrichtung des nebelhaltigen Windes herausgelenkt werden können. Aufgrund der dadurch verkleinerten Anströmfläche wird die Wasserausbeute verringert.

Die WO 2016/062877 A1 offenbart einen Nebelkollektor, der neben einem Sammelnetz für die Wassertropfen und einer Tragstruktur für dieses Sammelnetz ein zusätzliches Trägergitter, das entlang der Fläche des Sammelnetzes verläuft, aufweist. Das Trägergitter trägt zur Stabilisierung des teils extremen Witterungsbedingungen ausgesetzten Nebelkollektors bei, verändert jedoch das Durchströmungsverhalten des natürlich bewegten Nebels durch die Abscheidestruktur.

Ausgehend von diesem Stand der Technik ist es Aufgabe der vorliegenden Erfindung, eine hinsichtlich der Wassergewinnung und -sammlung verbesserte Vorrichtung bereitzustellen, die insbesondere dahingehend optimiert ist, dass einmal aus der Luft gesammeltes Wasser nicht wieder durch den Wind fortgetragen wird.

Diese Aufgabe wird durch ein Wasser-Gewinnungs-Modul zum Abscheiden und Sammeln von Wasser aus einem Aerosol mit den Merkmalen des Anspruchs 1 gelöst.

Die weitere Aufgabe, eine Vorrichtung zum Wasser Sammeln bereitzustellen, die stabil und zuverlässig ist und gleichzeitig eine im Vergleich zu einem einzigen Wasser-Gewinnungs-Modul höhere Wasserausbeute ermöglicht, wird durch einen modularen Wasserkollektor mit den Merkmalen des unabhängigen Anspruchs 10 gelöst.

Die noch weitere Aufgabe, eine Vorrichtung zu schaffen, mit der ein ganzer Nebelstrom mit möglichst hoher Effizienz der Wassergewinnung unterzogen werden kann, wird durch das Wasserkollektor-Feld mit den Merkmalen des unabhängigen Anspruchs 12 gelöst.

Bevorzugte Ausführungsformen sind in den Unteransprüchen ausgeführt.

In einer ersten Ausführungsform verfügt das erfindungsgemäße Wasser-Gewinnungs-Modul (hierin auch nachfolgend einfach als Modul bezeichnet) zum Abscheiden und Sammeln von Wasser aus einem Aerosol in einem Luftstrom über einen Rahmen, der zwei Längsrahmenelemente und zwei Querrahmenelemente, die an Verbindungsstellen miteinander verbunden sind, und zumindest ein ein- oder mehrstückiges Gewirke, das über die zwei Querrahmenelemente in dem Rahmen aufgespannt ist. Vorteilhaft sind weiter die zwei Längsrahmenelemente des Moduls jeweils über zumindest eines ihrer Enden mit einem Längsrahmenelement eines weiteren Moduls verbindbar, so dass die erfindungsgemäße Modularität des gesamten Elementes geschaffen wird - Modularität heißt hier, dass eines der Module so ausgebildet ist, dass es bei bedarf mit einem weiteren geschickt zu einer größeren Einheit verbunden werden kann.

Dabei ist das in einer Benutzungsanordnung des Moduls, wenn es also zum Wassersammeln aufgebaut ist, unten in Richtung der Schwerkraft zu liegen kommende Querrahmenelement eine Auffangrinne und zumindest eines der zwei Längsrahmenelemente ist ein Längsrohr. Die durch das Gewirke gebildete Fläche ist dabei so angeordnet, dass sie von dem Aerosol in dessen Bewegungsrichtung durchströmt werden kann. "Gewirke" meint hierin eine flächige netzartige, zwei- oder sogar dreidimensionale Struktur aus Fasern bzw. Filamenten. Es kann ein einzelnes Gewirkestück nahezu die gesamte Rahmenfläche überspannen, oder mehrere bspw. rechteckige Gewirkestücke, die bspw. in Längs- oder Querbahnen verlaufen, die vorteilhaft ohne Abstände zueinander angeordnet sind, überspannen in ihrer Gesamtheit die vorgegebene Rahmenfläche.

Ferner weist vorteilhaft das Längsrahmenelement, das ein Rohr ist - also gegebenenfalls auch beide Längsrahmenelemente als Längsrohre - an der Verbindungsstelle mit der Auffangrinne eine Einmündung auf, durch die die Auffangrinne in das Längsrohr derart aufgenommen ist, dass das gesammelte Wasser, das durch die Auffangrinne fließt, sofort von dem Längsrohr abgeführt werden kann, so dass damit Wasserverlust durch Austragen des Wassers aus dem Rohr vom Wind oder durch Verdampfen vermieden wird.

Das in der Benutzungsanordnung des Moduls oben zu liegen kommende, obere Querrahmenelement und die Auffangrinne weisen jeweils miteinander fluchtende bogenförmige Krümmungen auf, die sich senkrecht in Bezug zu einer Ebene, die von den zwei Längsrahmenelementen aufgespannt wird, erstreckt.

In der Benutzungsanordnung wird der Fachmann das Modul so ausrichten, dass der Luftstrom des Aerosols in die Krümmung hinein strömt.

Über die aufspannende Verbindung des oberen Querrahmenelements und der Auffangrinne mit einem einstückigen Gewirke wird dieses ebenfalls gekrümmt, indem es zumindest an mehreren Aufspannpunkten umgelenkt wird. Bei einem mehrstückigen Gewirke können auch die einzelnen Gewirkestücke abgewinkelt zueinander angeordnet und die Krümmung so angenähert werden. Die bogenförmige Krümmung wird umso besser auf das Gewirke übertragen, je mehr Aufspannpunkte das Gewirke an den Querrahmenelementen aufspannen.

Vorteilhaft wird über die Krümmung zum einen eine größere durchströmbare Fläche der Abscheidestruktur als bei einer ebenen Fläche erreicht, zum anderen wird eine bessere Durchströmung des Gewirkes erzielt, indem ein höherer Anteil an dispergierten Tröpfchen auf Kollisionskurs mit den Filamenten des Gewirkes gelenkt wird, während der Anteil, der das Gewirke nur umstömt, verringert wird. Insgesamt wird dadurch die Abscheiderate von Wassertropfen erhöht und damit die Wasserausbeute gesteigert.

In einer bevorzugten Ausführungsform weist die Krümmung einen Krümmungsradius auf, der mindestens einer Breite des Wasser-Gewinnungs-Moduls entspricht. Als Breite des Moduls gilt hier der Abstand der beiden Längsrahmenelemente zueinander. Bevorzugt weicht der Krümmungsradius jedoch nicht um mehr als zehn Prozent nach oben von der Breite des Moduls ab.

In einer weiteren Ausführungsform sind das Längsrahmenelement und das Längsrohr oder die beiden Längsrohre, die jeweils den Rahmen des Moduls bilden, jeweils an zumindest einem Ende als Steckverbinder ausgebildet. So können mehrere Module direkt miteinander per Steckverbindung verbunden werden. Die Steckverbindung kann auch ein zusätzliches Steckelement umfassen, das mit einem unteren Ende eines einen und das mit einem oberen Ende eines anderen Längsrahmenelements verbunden wird, wobei das Steckelement bevorzugt als Rohrabschnitt ausgeführt ist, sodass eine Wasserführung über mehrere Module hinweg bereitgestellt wird.

Auf diese Weise können vorteilhaft mehrere Module mit einer insgesamt größeren Fläche für die Abscheidung genutzt werden. Die Steckverbindungen können ohne Werkzeug auch mehrfach verbunden und wieder gelöst werden. Vorteilhaft sind zu Wartungszwecken Einzelmodule leicht austauschbar.

So kann die Wasserführung sowohl horizontal über die Auffangrinne als auch vertikal durch das Längsrohr oder die Längsrohre erfolgen, wobei über die Einmündung die beiden Fluidströme in dem Längsrohr zusammengeführt werden.

Gemäß einer weiteren Ausführungsform ist/sind innerhalb des Rahmens des Moduls eine oder mehrere Spannstreben angeordnet, die sich durch das ein- oder mehrstückige Gewirke erstrecken, wobei die Spannstrebe oder die Spannstreben eine oder mehrere Längs- und/oder eine oder mehrere Querstrebe(n) sind. Hierbei ist jede Längsstrebe mit dem oberen Querrahmenelement direkt oder über Befestigungsvorrichtungen verbunden, und/oder mit der Auffangrinne direkt oder über Befestigungsvorrichtungen verbunden. Eine direkte Verbindung kann beispielsweise über Verschweißen hergestellt sein. Bevorzugt wird jedoch die Verbindung dem oberen Querrahmenelement und/oder der Auffangrinne über Befestigungsvorrichtungen wie bspw. Haken, Clip-Elemente oder Aufnahmebohrungen geschaffen.

Es ist geschickt, wenn die Befestigung auch wieder gelöst werden kann, denn so kann das Modul gewartet bzw. das Gewirke ausgetauscht werden.

Ferner ist jede Querstrebe mit dem oberen Querrahmenelement und der Auffangrinne fluchtend gekrümmt bzw. übernimmt flexibel die Krümmung und kann bevorzugt mit den Längsrahmenelementen oder alternativ mit Längsspannstreben, die das Gewirke an dessen Rand aufnehmen, verbunden sein. Die Verbindung mit den Längsrahmenelementen kann wie bei den Querrahmenelementen realisiert sein. Durch die Krümmung der Querstreben wird das ein- oder mehrstückige Gewirke auf gleiche Weise gekrümmt und nicht nur abschnittsweise abgelenkt. Die Querstreben können aber auch flexibel sein und das Gewirke lediglich stützen, während die Krümmung z.B. über die Längsstreben übertragen wird.

Die Längs- bzw. Querstreben können grundsätzlich parallel zueinander und äquidistant angeordnet sein.

Durch die Spannstreben wird das Gewirke indirekt, d. h. ohne direkte Befestigung über Verschnüren, Verschweißen oder dergleichen am oberen Querrahmenelement und der Auffangrinne, im Rahmen aufgespannt. Die Spannstreben bilden dann eine Art Innenrahmen des Moduls, in den das Gewirke bereits vor der Endmontage eingespannt sein kann. Werden die Spannstreben lösbar über Befestigungsvorrichtungen mit den Rahmenelementen verbunden, so kann das Gewirke mitsamt den Spannstreben aus dem Rahmen entnommen werden, beispielsweise zur Wartung, Reparatur, oder zum Austausch bei Defekten.

Durch das ein- oder mehrstückige Gewirke können die Längs- und/oder Querstreben direkt hindurchgesteckt werden. Alternativ oder zusätzlich können in das Gewirke auch Röhren eingebracht sein, die zur Aufnahme der Längsstrebe(n) und/oder der Querstrebe(n) ausgebildet sind. Dadurch können die Längs- und/oder Querstreben besonders einfach durch das Gewirke, genauer durch die Röhren des Gewirkes, geführt und auch wieder entnommen werden, was vorteilhaft sowohl ein leichtes Aufspannen als auch einen leichten Austausch des Gewirkes mit wenigen Handgriffen und ohne zusätzliches Werkzeug möglich macht.

Ferner kann vorgesehen sein, dass entlang der Länge des oberen Querrahmenelements Sacklöcher oder Durchgangsbohrungen zur Aufnahme der Längsstreben vorliegen. Die Längsstreben können in diese Sacklöcher oder Durchgangsbohrungen eingeführt und so weit hochgeschoben werden, dass sie über die Auffangrinne geführt und abgesetzt, gegebenenfalls in eine Aufnahmevorrichtung in der Auffangrinne eingesetzt und so auf einfache Weise platziert und gegebenenfalls wieder entnommen werden können.

Eine weitere Ausführungsform des Moduls sieht vor, dass das ein- oder mehrstückige Gewirke einen Shading-Faktor in einem Bereich von 0,5 bis 0,6, bevorzugt in einem Bereich von 0,54 bis 0,58 aufweist. Der Shading-Faktor bezeichnet das Verhältnis der durch Fasern abgedeckten Fläche des Gewirkes zur gesamten aufgespannten Fläche des Gewirkes, gibt also an, wie stark das Gewirke den Strömungsweg des strömenden Aerosols abdeckt. In dieser Ausführungsform wird vorteilhaft eine hohe Durchströmung erzielt, bei der gleichzeitig eine hohe Kollisionsrate der Wasserteilchen mit den Filamenten des Gewirkes bewirkt wird, was eine erhöhte Abscheiderate zur Folge hat. Auch in Ausführungsformen mit Längs- und/oder Querstreben wird der Shading-Faktor der Gesamtkonstruktion nicht verändert, da über diese Konstruktionselemente höchstens punktuell zusätzliche Durchströmungsbarrieren entstehen.

Damit das durch ein erfindungsgemäßes Modul gesammelte Wasser seiner Bestimmung zugeführt werden kann, weist in einer weiteren Ausführungsform das Längsrohr, das an der Verbindungsstelle mit der Auffangrinne die Einmündung aufweist, unterhalb der Einmündung eine Wasserentnahmevorrichtung auf. Die Wasserentnahmevorrichtung kann auf einfachste Weise durch ein Loch, einen nach außen führenden Rohrabschnitt, aber auch über einen verschließbaren Zapfhahn oder andere, weiter führende Fluidleitungen realisiert sein. Das Wasser wird durch eine entsprechende Begrenzung daran gehindert, unter die Wasserentnahmevorrichtung zu fließen. Bevorzugt kann die Wasserentnahme gesteuert, also unterbrochen und wieder fortgesetzt werden.

Gemäß noch einer weiteren Ausführungsform ist die Auffangrinne zu der Einmündung hin geneigt, so dass das in der Auffangrinne aufgefangene Wasser unverzüglich in das Längsrohr abfließt und nicht verdampft oder durch Wind ausgetragen wird.

Das erfindungsgemäße Modul kann schließlich in noch einer weiteren Ausführungsform eine Standvorrichtung aufweisen. Ein Standfuß oder zwei Standfüßen ist/sind dabei mit den beiden Längsrahmenelementen an deren sich nach unterhalb der Auffangrinne erstreckenden Enden angeordnet. Die Standvorrichtung bildet eine stabile Verbindung des Moduls mit dem Untergrund in der Benutzungsanordnung; sie kann beispielsweise in den Boden eingelassen oder einbetoniert werden.

Sie kann weiter über einen Rohrabschnitt, der eine Wasserentnahmevorrichtung aufweist, mit dem Längsrohr, das an der Verbindungsstelle mit der Auffangrinne die Einmündung aufweist, fluidisch verbunden sein. Die Wasserentnahmevorrichtung muss also nicht direkt in dem Längsrohr vorliegen, sondern kann über den hierfür ausgebildeten, zusätzlichen Rohrabschnitt bereitgestellt werden.

Die Erfindung betrifft außerdem einen modularen Wasserkollektor, der zwei oder mehr der erfindungsgemäßen vorstehenden Module aufweist. Der Wasserkollektor umfasst dabei vorteilhaft ein Modul mit einer Standvorrichtung ein oder mehrere weitere Module ohne Standvorrichtung.

Die zwei Längsrahmenelemente des Moduls, das die Standvorrichtung aufweist, sind über ihr jeweils oberes Ende mit den Längsrahmenelementen des zumindest einen weiteren Moduls verbunden. Das Modul mit Standvorrichtung und Wasserentnahmevorrichtung bildet also das unterste Modul, auf dem ein oder mehrere weitere Module aufgesetzt werden.

Über die Wasserentnahmevorrichtung kann das gesammelte Wasser nicht nur eines Moduls, sondern des gesamten modularen Wasserkollektors entnommen und einer Verwendung zugeführt werden. Die Auffangrinnen jedes Moduls und die Längsrohre mit Einmündung definieren dabei einen Fließpfad für das in den jeweiligen ein- oder mehrstückigen Gewirken abgeschiedene Wasser, der in der Wasserentnahmevorrichtung mündet.

Der erfindungsgemäße modulare Wasserkollektor verbessert gegenüber einem Einzelmodul die Wasserausbeute auf Grund der vergrößerten Gewirkefläche. Dabei geht in den erfindungsgemäßen Wasserkollektoren Wasser nicht durch Wiederaustragung verloren, da jedes Modul seine eigene Wasserführung aufweist und das Wasser vertikal abführt. So kann der Weg der Wassertropfen im Gewirke im Vergleich zu einem nichtmodularen Wasserkollektor gleicher Höhe verkürzt werden und somit eine geringere Verlustrate bereits gesammelter Tropfen erzielt werden.

Über die Höhe der einzelnen Module, also die Länge der Längsrahmenelemente und die Anzahl der Module wird die Höhe des modularen Wasserkollektors festgelegt. Um eine für Wasserkollektoren vorteilhafte Höhe von fünf Metern zu erreichen, können bspw. fünf Module mit einer Höhe von je etwa einem Meter zusammengesetzt werden. Vorteilhaft kann die Höhe der modularen Wasserkollektoren jedoch auch nachträglich, nach dem Erstaufbau, variiert werden, indem Module hinzugefügt oder entnommen werden und es können mit einer Standardausführung der Module unterschiedliche modulare Wasserkollektoren realisiert werden.

Vorteilhaft kann über die Verwendung von Modulen der erfindungsgemäße Wasserkollektor über Steckverbinder leicht auf- und abgebaut werden. Die Module können etwa bei Defekten oder zur Inspektion einfach entnommen werden und durch Reservemodule ersetzt oder gar ohne das entnommene Modul weiterbetrieben werden. So werden mit dem modularen Wasserkollektor kürzere Ausfallzeiten erreicht.

Außerdem sind in dieser Ausführungsform jeweils die Krümmungen aller miteinander verbundenen Module kongruent. Somit wird das vorteilhafte Durchströmungsverhalten, das bereits bei einem Modul durch die Krümmung erzielt wird, auf den gesamten modularen Wasserkollektor angewendet.

Ein erfindungsgemäßes Wasserkollektor-Feld, das eine Vielzahl von erfindungsgemäßen Modulen aufweist, wird auf einer Aufstellfläche angeordnet, wobei entweder einzelne Module oder eben erfindungsgemäße modulare Wasserkollektoren (Kollektoren) in zumindest zwei, zur Aufstellfläche orthogonalen parallelen Ebenen, die einen vorbestimmten Ebenenabstand aufweisen, angeordnet. In einer Ebene sind sie nebeneinander mit einem vorbestimmten Grundabstand angeordnet und in zwei zueinander benachbarten Ebenen stehen sie derart zueinander versetzt, dass die Module einer ersten benachbarten Ebene jeweils zentriert zu den Mittelpunkten des Grundabstands der Module einer zweiten benachbarten Ebene stehen. Insgesamt werden nicht mehr als sechs, bevorzugt drei Ebenen gebildet, die sich als günstig erweisen haben, um den wesentlichen Wasseranteil aus der Luft zu sammeln.

Vorteilhaft kann durch eine solche Anordnung ein deutlich höherer Anteil des im Aerosol dispergierten Wassers abgeschieden werden und somit eine höhere Gesamtausbeute als bei Einzel-Kollektoren oder nicht abgestimmten Anordnungen erzielt werden. Generell werden die Ebenen nacheinander durchströmt und in jeder weiteren Ebene weniger Wasser abgeschieden, da der Tropfengehalt des Aerosols mit jeder durchströmten Ebene abnimmt. Vorteilhaft werden also nur so viele Ebenen gebildet, dass auch in der zuletzt durchströmten Ebene noch eine ausreichend hohe Ausbeute erzielt wird.

Wenn nicht nur Module sondern daraus errichtete Kollektoren eingesetzt werden, werden die Vorteile eines modularen Wasserkollektors mit den Vorteilen der koordinierten Anordnung als Wasserkollektor-Feld (Feld) kombiniert.

Die Aufstellfläche kann jeder Untergrund sein, über dem strömender Nebel zu erwarten ist; also ein freies Feld genauso wie ein (flaches) Gebäudedach.

Das je modularem Wasserkollektor aufgefangene Wasser kann im Feld auf geeignete Weise zusammengeführt, beispielsweise je Ebene in einer eigenen Zisterne gesammelt und gespeichert werden. Diese können an unterschiedlichen Randpositionen des Feldes vorgesehen sein, wodurch der Transportweg für die Weiterverwendung an verschiedenen Orten, beispielsweise Privathaushalten ohne eigene Wasserversorgung, reduziert wird.

Eine weitere Ausführungsform des Wasserkollektor-Feldes sieht vor, dass der Grundabstand in einem Bereich von einer Breite des Moduls plus/minus zehn Prozent dieses Wertes liegt und/oder der Ebenenabstand in einem Bereich von zwei Drittel der Breite des Moduls plus/minus zehn Prozent dieses Wertes liegt.

Vorteilhaft können die Module der weiteren Ebene dann die Abstände der davor durchströmten Ebene abdecken, wodurch auch der ein Modul bzw. einen modularen Wasserkollektor umströmende Teil des Aerosols in der nächsten Ebene durch ein Modul durch strömt, ohne aber der Strömung als Ganzem einen hohen Widerstand entgegen zu setzen, der zu Beschädigungen führen könnte.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine perspektivische Ansicht eines erfindungsgemäßen Moduls,
- **Fig. 2**: ein aus mehreren erfindungsgemäßen Modulen zusammengesetzter erfindungsgemäßer modularer Wasserkollektor,
- **Fig. 3a**: Frontansicht eines erfindungsgemäßen Moduls,
- **Fig. 3b**: eine Draufsicht des Moduls aus Fig. 3a
- **Fig. 3c**: eine perspektivische Ansicht des Moduls aus Fig. 3a
- **Fig. 4**: eine Durchsicht auf einen erfindungsgemäßen modularen Wasserkollektor
- **Fig. 5**: Deckelelement für das Modul aus Fig. 3
- **Fig. 6a/b**: Verbindungselement für das Modul aus Fig. 3 in perspektivischer und Frontansicht
- **Fig. 7a/b/c**: Rohrabschnitt mit Abfluss für das Modul aus Fig. 3 in zwei perspektivischen Ansichten und einem Längsschnitt
- **Fig. 8**: Standfußelement eines erfindungsgemäßen Moduls aus Fig. 3a
- **Fig. 9**: Detailansicht eines untersten Moduls zur Wasserentnahme
- **Fig. 10**: Wasserkollektor-Feld mit modularen Wasserkollektoren
- **Fig. 11**: weiteres Wasserkollektor-Feld mit modularen Wasserkollektoren
- **Fig. 12**: Draufsicht auf das Wasserkollektor-Feld aus Fig. 11

Die Erfindung bezieht sich auf ein Wasser-Gewinnungs-Modul, einen modularen Wasserkollektor, der aus mehreren erfindungsgemäßen Wasser-Gewinnungs-Modulen aufgebaut ist, sowie auf die Anordnung mehrerer Wasser-Gewinnungs-Module oder Wasserkollektoren zu einem Wasserkollektor-Feld, das beispielsweise zur Gewinnung von Wasser aus Nebel eingesetzt werden kann.

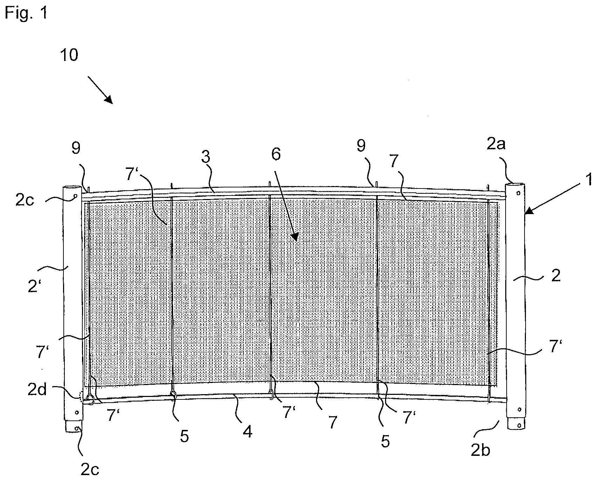

In **Fig. 1** ist ein erfindungsgemäßes Wasser-Gewinnungs-Modul 10 dargestellt. Es ist aufrecht, vertikal ausgerichtet, also näherungsweise orthogonal zur Bodenfläche, was der Benutzungsanordnung entspricht, wenn das Modul 10 zum Wassersammeln aus einem Aerosolstrom genutzt wird. Es weist einen Rahmen 1 auf, der zwei Längsrohre 2, 2' als Längsrahmenelemente sowie ein oberes Querrahmenelement 3 und eine Auffangrinne 4 als Querrahmenelemente umfasst. Die Rahmenelemente 2, 2', 3, 4 sind hierin aus Edelstahl gefertigt. Dabei sind das obere Querrahmenelement 3 und die Äuffangrinne 4 parallel zueinander und quer zu den Längsrohren 2 angeordnet, wobei das obere Querrahmenelement 3 mit den Längsrohren 2 nahe deren ersten (oberen) Enden und die Auffangrinne 4 nahe deren zweiten (unteren) Enden Verbindungsstellen mit den Längsrohren 2 aufweist, die dieser Ausführungsform verschweißt sind. Die Öffnung der Auffangrinne 4 weist zum oberen Querrahmenelement 3, ist also dem hier einstückigen Gewirke 6 zugewandt.

Eines der beiden Längsrohre 2, das in dieser Ansicht linke Längsrohr 2', weist am Verbindungspunkt zur Auffangrinne 4 eine Einmündung 2d auf, über die Wasser aus der Auffangrinne 4 in das Längsrohr 2' fließt.

Die Enden der Längsrohre 2, 2' sind hier als Steckverbinder 2a, 2b ausgebildet, sodass beim Zusammenführen zweier gleich ausgerichteter Module 10 die beiden Steckverbinder 2a des einen Moduls 10 mit den beiden Steckverbindern 2b des anderen Moduls 10 in Eingriff treten. Zusätzlich weisen die Längsrohre 2, 2' Bohrungen 2c auf, durch die Verbindungsbolzen, Schrauben oder dergleichen geführt werden können, um die Verbindung zweier Module 10 zu stabilisieren.

Das obere Querrahmenelement 3 und die Auffangrinne 4 sind auf gleiche Art gekrümmt, was in **Fig.1** nur andeutungsweise zu erkennen ist. Dadurch überspannt das Gewirke 6, das indirekt über diese Querrahmenelemente aufgespannt wird, eine größere Fläche, als es bei direktem Aufspannen zwischen den Längsrohren 2 der Fall wäre.

Fünf Längsstreben 7' sind parallel zu den Längsrohren 2, 2' im Außenrahmen 1 angeordnet und über Hakenelemente 5, mit der Auffangrinne 4 und über Durchgangsbohrungen 9 mit dem oberen Querrahmenelement 3 verbunden. Die beiden äußeren Längsstreben 7' weisen dabei einen geringen Abstand zu den Längsrohren 2 auf, um das Gewirke 6, das sie gemeinsam mit zwei Querstreben 7 aufspannen, in einem möglichst großen Teil der durch den Außenrahmen 1 begrenzten Fläche aufzuspannen. Das Gewirke 6 erhält durch Verknüpfung mit den Querstreben 7, die durch Bohrungen durch die Längsstreben 7' verlaufen, und die Krümmung von oberem Querrahmenelement 3 und Auffangrinne 4 aufweisen, seine flächige, gekrümmte Form.

Die Befestigung der Längsstreben 7' am Außenrahmen 1 ist lösbar und erfolgt durch Durchstecken einer Längsstrebe 7' durch eine Durchgangsbohrung 9 im oberen Querrahmenelement und Einhaken bzw. Festklemmen über einen Haken 5 an der Auffangrinne 4. Dadurch ist die Befestigung einfach lösbar und die Längsstreben 7' mitsamt Querstreben 7 und Gewirke 6 können entnommen und ebenso (wieder) eingesetzt werden.

Bereits ein einzelnes Wasser-Gewinnungs-Modul 10 kann zur Wassergewinnung eingesetzt werden, indem es quer zur Strömungsrichtung in einem Aerosolstrom in Benutzungsanordnung gebracht wird, sodass es durchströmt wird und sich Wassertropfen am Gewirke 6 abscheiden, diesem entlang nach unten fließen und die dann in der Auffangrinne 4 gesammelt werden.

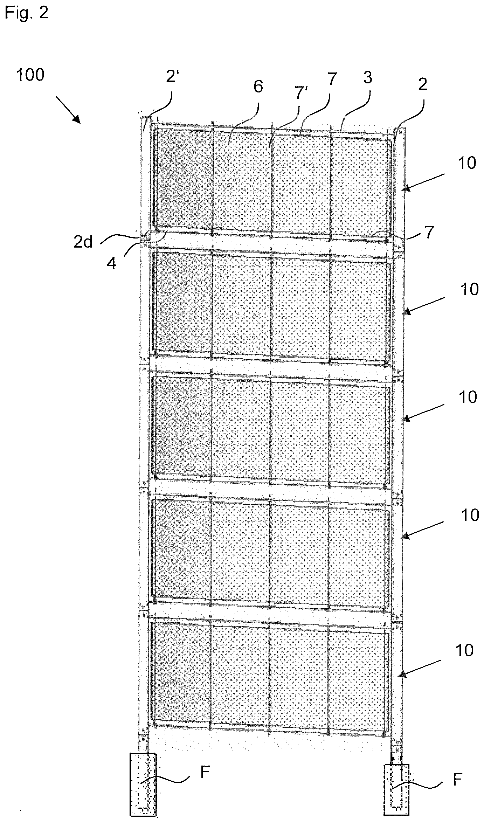

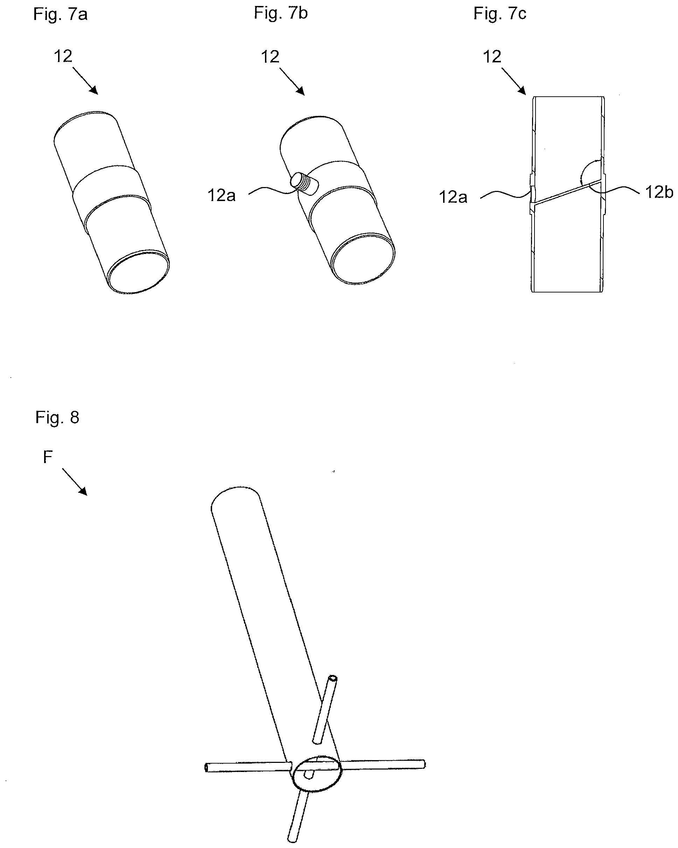

**Fig. 2** zeigt einen aus fünf Wasser-Gewinnungs-Modulen 10 zusammengesetzten modularen Wasserkollektor 100. Das unterste Wasser-Gewinnungs-Modul 10 ist über zwei Standfüße F (vgl. **Fig. 8**), die im Untergrund einbetoniert sind, mit dem Boden verbunden.

Alternativ kann bereits aus zwei Wasser-Gewinnungs-Modulen, von denen eines eine Wasserentnahmevorrichtung und eine Standvorrichtung aufweist, ein funktionsfähiger modularer Wasserkollektor entstehen (figurativ nicht gezeigt). Bevorzugt werden jedoch noch mehr Module 10 verwendet - es können drei bis zehn oder mehr Module 10 eingesetzt werden - je nach verfügbarem Raum, den herrschenden Witterungsverhältnissen sowie der Größe der einzelnen Module 10.

Die einzelnen Wasser-Gewinnungs-Module 10 sind an ihren Längsrohren 2, 2' aufeinander gesetzt und so stabil miteinander verbunden. Die Standfüße F sind, figurativ nicht zu sehen, ggfs. in den Boden eingelassen und einbetoniert. Selbstverständlich sind andere Ausführungsformen denkbar, bei denen eine stabile Verbindung zur Aufstellfläche auf andere Weise hergestellt wird, beispielsweise über Spannseile oder eine tiefer in den Boden ragende Verankerung. Die Standfüße F weisen mit einem Abschnitt aus dem Boden heraus und sind an ihren nach oben ragenden Enden als Steckverbinder 2a ausgebildet. Dadurch kann das unterste Modul 10 mit seinen Steckverbindern 2b auf die Standfüße F aufgesteckt werden. Weitere Module 10 können auf gleiche Weise aufeinander gesetzt werden, wobei die Krümmung immer in die gleiche Richtung weist, sodass der Wasserkollektor 100 insgesamt eine einheitliche, in eine Richtung weisende Krümmung aufweist (in der Perspektive von **Fig. 2** nicht sichtbar). Die Steckverbindungen sind lösbar, sodass Module 10 auch wieder entnommen werden können.

Das Wasser wird in jedem Modul 10 separat abgeschieden und über dessen eigene Auffangrinne 4 zur Einmündung 2d des Längsrohrs 2' geleitet. Das Längsrohr 2' leitet das gesammelte Wasser entlang seiner Länge in das Längsrohr 2' des darunterliegenden Moduls 10 ab oder, am untersten Modul 10, über eine Wasserentnahmevorrichtung (in **Fig. 2** nicht gezeigt) zur Entnahme.

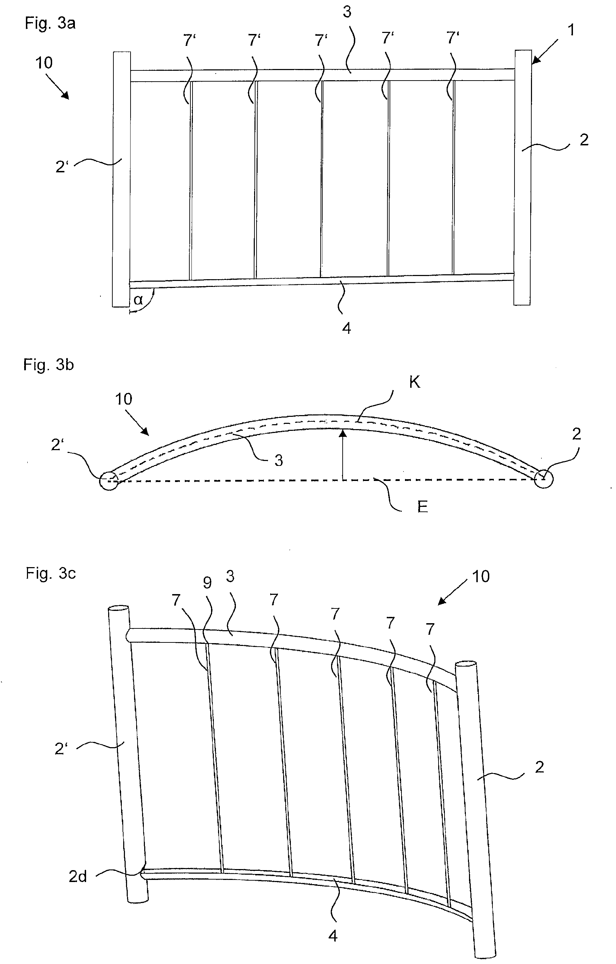

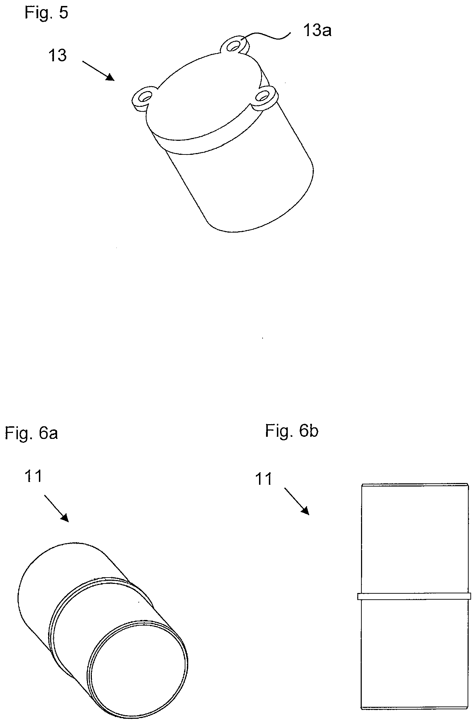

Fig. **3a** bis **3c** zeigen eine Ausführungsform des Wasser-Gewinnungs-Moduls 10, das über Verbindungselemente 11 (vgl. **Fig. 6a, 6b**) mit weiteren Wasser-Gewinnungs-Modulen 10 verbunden werden kann. Dieses Modul 10 ist ebenfalls von einem Rahmen 1 aus zwei Längsrohren 2, 2', einem oberen Querrahmenelement 3 und einer Auffangrinne 4 begrenzt und weist fünf Längsstreben 7' auf, die mit oberem Querrahmenelement 3 und Auffangrinne 4 lösbar verbunden sind. Das Gewirke ist hier nicht dargestellt - es kann bspw. zur Reparatur entnommen sein.

In **Fig. 3a** ist die übereinstimmende Krümmung K von oberem Querrahmenelement 3 und Auffangrinne 4 durch die Frontansicht nicht erkennbar, in der Draufsicht in **Fig. 3b** wird sie aber umso deutlicher. Die beiden Längsrohre 2 definieren eine Ebene E, wobei die Blickrichtung hier genau entlang dieser Ebene E dargestellt ist. Senkrecht zur Ebene E (dargestellt durch einen Pfeil) erstreckt sich die bogenförmige, fluchtende Krümmung K (gekrümmte gestrichelte Linie) vom oberen Querrahmenelement 3 und Auffangrinne 4, sodass die Auffangrinne 4 in dieser Ansicht hinter dem oberen Querrahmenelement 3 nicht sichtbar ist.

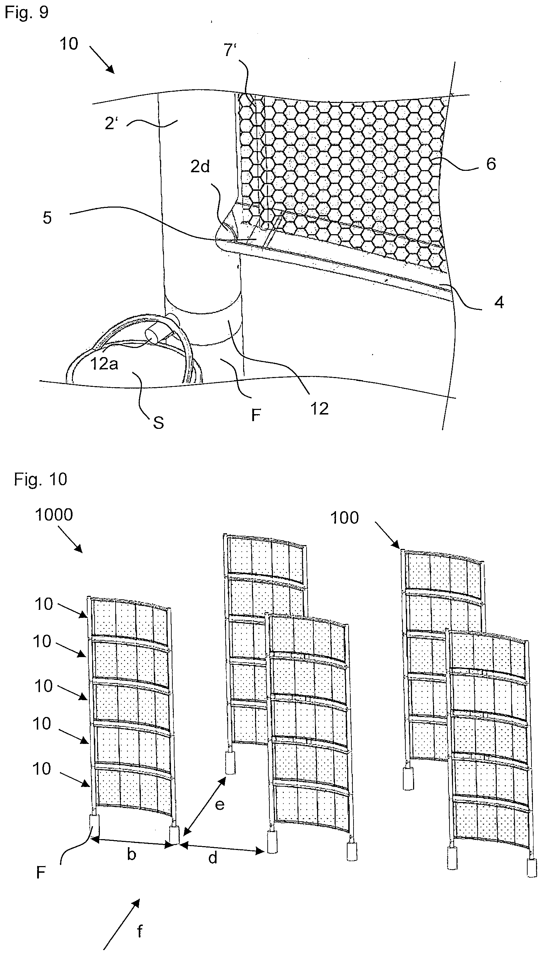

Die Befestigung der Längsstreben 7' über Befestigungselemente 5 an der Auffangrinne 4 und Befestigungselemente 9 am oberen Querrahmenelement 3 wird zusammen mit **Fig. 9** besser deutlich. Das Befestigungselement 5 ist mit der Auffangrinne 4 verbunden und weist eine Aufnahme auf, deren Durchmesser mit dem Durchmesser einer Längsstrebe 7' korrespondiert, sodass sie in diese Aufnahme gesteckt und dadurch arretiert werden kann. Entsprechend dazu ist das Befestigungselement 9 ein Sackloch 9 in dem oberen Querrahmenelement 3, das in seinem Durchmesser ebenfalls mit dem Durchmesser der Längsstrebe 7' korrespondiert, sodass diese in das Sackloch 9 geschoben werden kann. Die Längsstrebe 7' kann noch weiter nach oben geschoben, aus der Aufnahme des Verbindungselements 5 mit der Auffangrinne 4 wieder gelöst und durch Kippen und Herausziehen entnommen werden. Auf diese Weise sind alle Längsstreben 7' befestigt, sodass ein Austausch des Gewirkes 6 ermöglicht wird, indem die Längsstreben 7' gelöst, durch das Austauschgewirke 6 geführt und wieder befestigt werden.

Der in **Fig. 3a** eingezeichnete Verbindungswinkel α zwischen Längsrohr 2 und Auffangrinne liegt knapp über 90°, so dass die Auffangrinne 4 leicht geneigt ist in Richtung des Längsrohrs 2' mit Einmündung 2d (vgl. **Fig. 3c**). Dadurch fließt das in der Auffangrinne 4 gesammelte Wasser in Richtung der Einmündung 2d, wird dort in das Längsrohr 2' geleitet und durch die Schwerkraft nach unten transportiert.

In einer alternativen, figurativ nicht gezeigten Ausführungsform kann die Neigung zur Einmündung hin auch dadurch bereitgestellt werden, dass sie in dem Halbrohr der Auffangrinne vorliegt, z. B. indem sich die Dicke des Bodens der Auffangrinne zur Einmündung hin verjüngt. Eine solche Auffangrinne kann auch in einem Winkel von 90° an die Längsrohre anschließen.

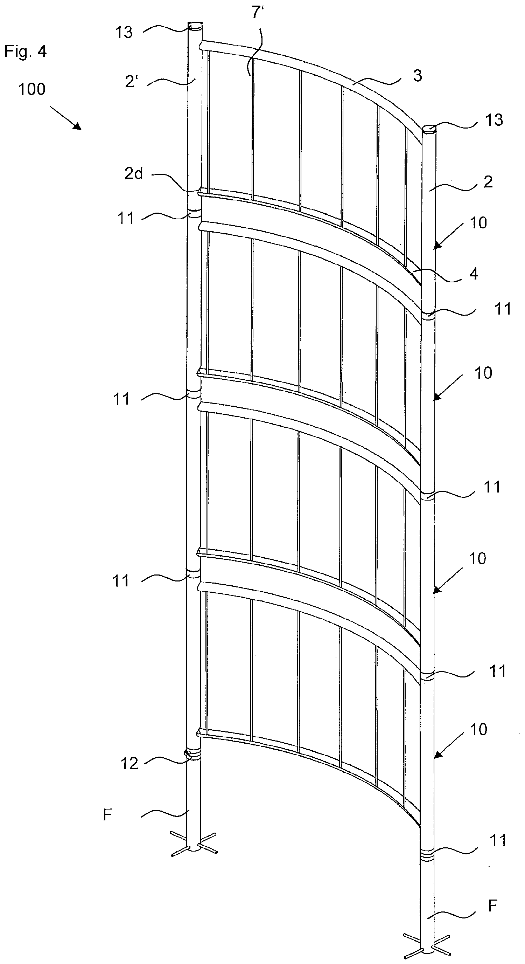

In **Fig. 4** ist ein aus vier dieser, mit Verbindungselementen 11 verbundenen, also aneinandergesteckten Wasser-Gewinnungs-Module 10 zusammengesetzter modularer Wasserkollektor 100 zu sehen, wobei jedes Modul 10 hier sieben Längsstreben 7'aufweist. Generell ist eine höhere Anzahl von Längsstreben 7' bei einem weicheren Gewirke bevorzugt. Die Gewirke sind zur besseren Übersichtlichkeit nicht dargestellt. Die Verbindung zum Standfuß F wird an dem Längsrohr 2' über den Rohrabschnitt 12 geschaffen. Der Rohrabschnitt 12 (vgl. **Fig. 7a** bis **7c**) weist eine Wasserentnahmevorrichtung in Form einer Abflussöffnung 12a auf, die einen Abfluss bereitstellt. Im Inneren des Rohrabschnitts 12 verläuft eine schräge Absperrung 12b, die das von oben anströmende Wasser in Richtung der Abflussöffnung 12a lenkt und den Wasserfluss unter die Abflussöffnung 12a unterbindet.

Damit der Fließpfad von einem Modul 10 in das darunter liegende nicht behindert wird, müssen die Verbindungselemente 11 an den Längsrohren 2', die Wasser leiten, hohl sein und fungieren dann als Leitungsabschnitte.

Das oberste Modul 10 weist hier an beiden Längsrohren 2, 2' ein Deckelelement 13 (vgl. **Fig. 5**) auf. Es verschließt die Längsrohre 2, 2' nach oben hin und kann somit das Eindringen von unerwünschten Substanzen wie z.B. Staub oder anderen Verunreinigungen, aber auch das Eindringen von Tieren wie etwa Insekten verhindern. Außerdem weist das Deckelelement 13 Ösen 13a auf, über die mittels Seilen oder anderen geeigneten Befestigungen eine Spannkonstruktion zur Stabilisierung des Wasserkollektors 100 in Benutzungsanordnung aufgebaut werden kann. Das Deckelelement 13 wird über eine steckbare Verbindung - wie für die Module 10 mit und ohne Verbindungselemente 11 beschrieben - am Längsrohr 2, 2' angebracht.

Das Gewirke 6 ist in den **Fig. 3a** bis **3c** und **4** nicht dargestellt, ist aber bei einer Verwendung zum Wasser Sammeln eingebracht. Es ist im Sinne der Erfindung, eine vereinfachte Wartung und Reparatur und damit längere Betriebsdauern zu ermöglichen. Teile des Wasserkollektors können durch die teils hohen Belastungen während des Betriebs, insbesondere beim Einsatz zum Gewinnen von Wasser aus Nebel auf freiem Feld, durch Witterung und weitere Einflussfaktoren beschädigt werden. Insbesondere das Gewirke ist verschiedenen Windstärken des Nebels ausgesetzt, der es an- und durchströmt und kann z.B. zerreißen. Es kann daher von einem Modul das Gewirke entfernt und ein Ersatz montiert werden. Es können auch der Innenrahmen, also Längs- und Querstreben, mitsamt Gewirke oder die Längsstreben mitsamt Gewirke ausgetauscht werden, was durch die lösbare Verbindung über Befestigungselemente einfach und schnell geschehen kann. Auch ein einzelnes Modul kann wieder von den übrigen Modulen gelöst werden. Dann kann ein Ersatz montiert werden oder, falls gerade kein Ersatz verfügbar ist, der Wasserkollektor weiter betrieben werden, bis eine Reparatur erfolgt oder Ersatz besorgt worden ist. Der Weiterbetrieb ist möglich, da durch den modularen Aufbau in der Regel noch betriebsbereite Module vorhanden sind, die auch unabhängig von anderen Modulen Wasser abscheiden und zusammenführen können.

**Fig. 9** zeigt die Wasserentnahme am untersten Wasser-Gewinnungs-Modul 10 eines modularen Wasserkollektors 100. In dem Längsrohr 2' mit Einmündung 2d fließt das von darüber angeordneten weiteren Modulen 10 gesammelte, zum Längsrohr 2' geleitete Wasser durch die Schwerkraft angezogen nach unten und mit dem im untersten Modul 10 abgeschiedenen, über die Auffangrinne 4 zur Einmündung 2d geleiteten Wasser zusammen. Am Rohrabschnitt 12, der eine Wasserentnahmevorrichtung über eine Abflussöffnung 12a bereitstellt und das Längsrohr 2' mit dem Standfuß F verbindet, sodass der Wasserkollektor 100 vertikal aufgestellt werden kann, wird das Wasser entnommen und in einem Sammelbehälter S aufgefangen. Der Abfluss kann temporär verschlossen werden, etwa über einen aufzuschraubenden Verschluss oder einen in die Abflussöffnung 12a einzubringenden Stöpsel. Die Sammelkapazität in einem Längsrohr 2' reicht dabei maximal bis zu dessen Einmündung 2d, sodass die Entnahme erfolgen sollte, bevor der Wasserstand diese Grenze erreicht und Verluste auftreten. Die Entnahme kann allerdings auch kontinuierlich erfolgen.

In **Fig. 10** sind fünf modulare Wasserkollektoren 100, zusammengesetzt aus je fünf Wasser-Gewinnungs-Modulen 10, in zwei Ebenen zu einem Wasserkollektor-Feld 1000 angeordnet. Dabei sind alle Wasserkollektoren 100 so angeordnet, dass ihre Krümmung K in die gleiche Richtung weist, die mit der Strömungsrichtung f des Aerosols übereinstimmt; der Aerosolstrom bläst also in die Krümmungen K hinein. Bei Anordnung auf offenem Feld, um Wasser aus natürlich auftretendem und strömendem Nebel abzuscheiden, ist diese Strömungsrichtung f nicht immer gleich, sodass die Kollektoren 100 gemäß einer Hauptströmungsrichtung f ausgerichtet werden, die anhand der vor Ort herrschenden geologischen und meteorologischen Bedingungen bzw. über Messungen oder Erfahrungswerte im Voraus bestimmt werden kann.

Die Wasserkollektoren 100 sind innerhalb einer Ebene in einem gleichmäßigen Grundabstand d zueinander angeordnet, der hier der Breite b eines Wasserkollektors 100 bzw. eines Wasser-Gewinnungs-Moduls 10 entspricht. In der zweiten Ebene stehen die Wasserkollektoren 100 zu denen der ersten Ebene versetzt, sodass jeweils der Bereich zwischen zwei Kollektoren 100 der ersten Ebene in der zweiten Ebene von einem Kollektor 100 abgedeckt wird, und umgekehrt jeder Bereich, der in der ersten Ebene von einem Kollektor 100 abgedeckt wird, in der zweiten Ebene zwischen zwei Kollektoren 100 liegt oder von keinen weiteren Wasserkollektoren 100 begrenzt wird. Die Ebenen weisen zueinander einen Ebenenabstand e auf, der geringer ist als die Breite b und auch geringer als der Grundabstand d. So wird es möglich, einen möglichst hohen Anteil des dispergierten Wassers abscheiden zu können, indem gezielt die einen modularen Flüssigkeitskollektor 100 seitlich umströmende Luft in der nächsten Ebene aufgefangen wird.

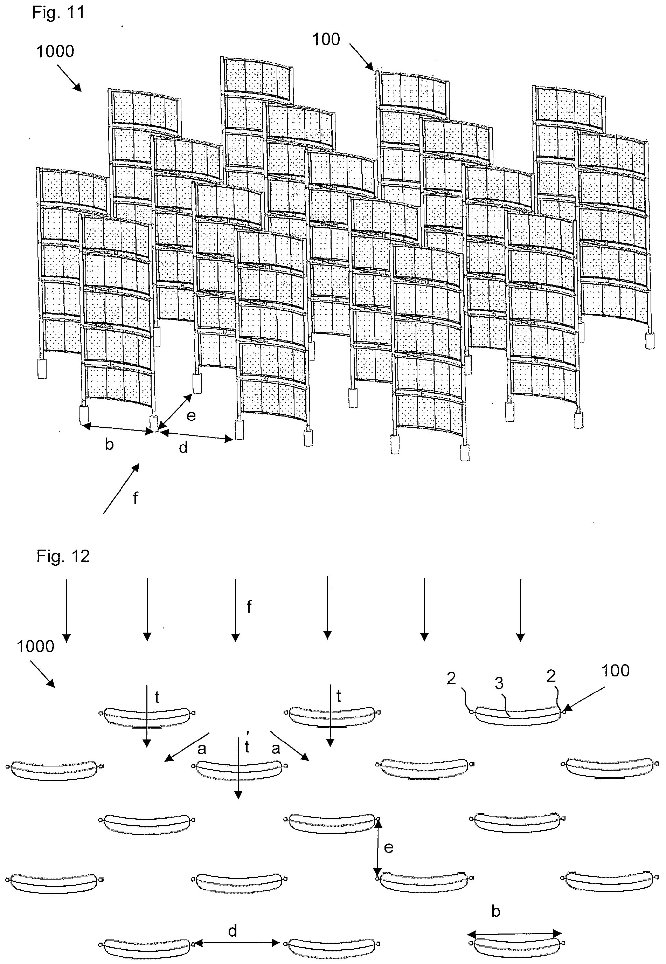

Anordnungen mit mehr als zwei Ebenen und mehr als fünf Kollektoren 100 sind möglich. So ist als weiteres Beispiel in **Fig. 11** ein Wasserkollektor-Feld 1000 aus insgesamt 17 modularen Wasserkollektoren 100, die in fünf Ebenen, genauer drei Ebenen zu je drei modularen Wasserkollektoren 100 und zwei Ebenen zu je vier modularen Wasserkollektoren 100, die sich jeweils abwechseln, angeordnet sind. Auch hier entsprechen die Abstände d zwischen den Wasserkollektoren 100 deren Breite b.

**Fig. 12** zeigt eine Draufsicht auf das Wasserkollektor-Feld 1000 aus **Fig. 11** und verdeutlicht die Strömungsvorgänge durch ein solches Wasserkollektor-Feld 1000. Denn auch wenn die Strömungsrichtung f des Luftstroms, in dem Wasserpartikel dispergiert sind, in die Ebenen der modularen Wasserkollektoren 100 hineinweist, wird nicht der gesamte Luftstrom direkt durch eines der Gewirke 6 geführt. Ausgehend von einem in der vordersten, also der Strömungsrichtung f zugewandten, Ebene positionierten modularen Wasserkollektors 100 strömt ein Teil t des Luftstroms durch den modularen Wasserkollektor 100 hindurch, während andere Teile a des Luftstroms seitlich an diesem vorbeigelenkt werden. In der nächsten Ebene treffen diese Teile a dann mittig auf einen weiteren modularen Wasserkollektor 100, sodass sie nun durch dessen Gewirke 6 hindurch strömen, wobei sich Wasserpartikel abscheiden. Auf diese Weise durchströmen alle Luftstromteile (auf der Breite des Wasserkollektor-Feldes 1000) zumindest einmal, eher sogar mehrfach ein Gewirke 6, sodass eine höhere Gesamtmenge an abgeschiedenem Wasser über der Aufstellfläche gesammelt werden kann als es in anderen, Einzel- oder unkoordinierten Anordnungen möglich wäre.

Figurativ nicht dargestellt ist, dass für die Anordnung zu einem Wasserkollektor-Feld nicht zwingend modulare Wasserkollektoren nötig sind, auch wenn diese vorteilhaft sind. Auch einzelne Wasser-Gewinnungs-Module können zu einem Wasserkollektor-Feld angeordnet sein; sie müssen dazu nicht in einen modularen Wasserkollektor eingebaut sein.

Auch sind noch andere Anordnungen denkbar - da aber bei mehr als sechs Ebenen die Wasserausbeute in den hinteren Ebenen zu gering wird, sind mehr Ebenen nicht sinnvoll. Die Anzahl der nebeneinander aufgestellten Wasser-Gewinnungs-Module oder Wasserkollektoren wird unter Berücksichtigung des Platzbedarfs, der Kosten je weiterem Wasser-Gewinnungs-Module oder Wasserkollektoren und der gewünschten zu sammelnden Wassermenge gewählt.

### BEZUGSZEICHENLISTE

- 1: Rahmen
- 10: Wasser-Gewinnungs-Modul
- 100: modularer Wasserkollektor
- 1000: Wasserkollektor-Feld
- 2: Längsrohr
- 2': Längsrohr mit Einmündung
- 2a;b: Steckverbinder
- 2c: Bohrung
- 2d: Einmündung
- 3: oberes Querrahmenelement
- 4: Auffangrinne
- 5: Befestigungsvorrichtung Auffangrinne
- 6: Gewirke
- 7: Querstrebe
- 7': Längsstrebe
- 9: Durchgangsbohrung
- 11: Verbindungselement
- 12: Rohrabschnitt
- 12a: Abflussöffnung
- 12b: Absperrung
- 13: Deckelelement
- 13a: Öse des Deckelelements
- F: Standfuß
- S: Sammelbehälter
- b: Breite des Wasser-Gewinnungs-Moduls
- d: Grundabstand
- e: Ebenenabstand
- f: (Haupt-)Strömungsrichtung Luftstrom
- a: Luftstrom around
- t: Luftstrom through
- α: Verbindungswinkel
- E: Ebene
- K: Krümmung

## Patentansprüche

1. Wasser-Gewinnungs-Modul (10), ausgebildet zum Abscheiden und Sammeln von Wasser aus einem Aerosol in einem Luftstrom
wobei das Wasser-Gewinnungs-Modul (10)
- einen Rahmen (1), der zwei Längsrahmenelemente und zwei Querrahmenelemente, die an Verbindungsstellen miteinander verbunden sind, und
- zumindest ein ein- oder mehrstückiges Gewirke (6), das über die zwei Querrahmenelemente in dem Rahmen (1) aufgespannt ist,
aufweist,
**dadurch gekennzeichnet, dass**
die zwei Längsrahmenelemente jeweils über zumindest eines ihrer Enden mit einem Längsrahmenelement eines weiteren Wasser-Gewinnungs-Moduls (10) verbindbar sind, und wobei
- ein in einer Benutzungsariordnung des Wasser-Gewinnungs-Moduls (10) unten zu liegen kommendes Querrahmenelement eine Auffangrinne (4) ist und
zumindest eines der zwei Längsrahmenelemente ein Längsrohr (2') ist, wobei das zumindest eine Längsrohr (2') an der Verbindungsstelle mit der Auffangrinne (4) eine Einmündung (2d) aufweist,
wobei ein in der Benutzungsanordnung des Wasser-Gewinnungs-Moduls (10) oben zu liegen kommendes, oberes Querrahmenelement (3) und die Auffangrinne (4) jeweils eine miteinander fluchtende bogenförmige Krümmung (K) aufweisen, die sich senkrecht in Bezug zu einer Ebene (E), die von den zwei Längsrahmenelementen aufgespannt wird, erstreckt.

2. Wasser-Gewinnungs-Modul (10) nach Anspruch 1,
**dadurch gekennzeichnet, dass**
die Krümmung (K) einen Krümmungsradius aufweist, der in einem Bereich von mindestens einer Breite (b) des Wasser-Gewinnungs-Moduls (10) bis zu der Breite (b) des Wasser-Gewinnungs-Moduls (10) plus zehn Prozent der Breite (b) liegt.

3. Wasser-Gewinnungs-Modul (10) nach Anspruch 1 oder 2,
**dadurch gekennzeichnet, dass**
das Längsrahmenelement und das Längsrohr (2') oder die beiden Längsrohre (2, 2'), die jeweils den Rahmen (1) bilden, jeweils an zumindest einem Ende als Steckverbinder ausgebildet sind.

4. Wasser-Gewinnungs-Modul (10) nach zumindest einem der Ansprüche 1 bis 3, **dadurch gekennzeichnet, dass**
innerhalb des Rahmens (1) eine oder mehrere Spannstreben angeordnet sind, die sich durch das ein- oder mehrstückige Gewirke (6) erstrecken, wobei die Spannstrebe oder die Spannstreben eine oder mehrere Längsstrebe(n) (7') und/oder eine oder mehrere Querstrebe(n) (7) sind,
wobei jede Längsstrebe (7')
- mit dem oberen Querrahmenelement (3) direkt oder über Befestigungsvorrichtungen verbunden ist, und/oder
- mit der Auffangrinne (4) direkt oder über Befestigungsvorrichtungen (5) verbunden ist
und/oder
wobei jede Querstrebe (7) mit dem oberen Querrahmenelement (3) und der Auffangrinne (4) fluchtend gekrümmt ist und bevorzugt mit dem Längsrahmenelement und dem Längsrohr (2') oder den beiden Längsrohren (2, 2') verbunden ist.

5. Wasser-Gewinnungs-Modul (10) nach Anspruch 4,
**dadurch gekennzeichnet, dass**
die Befestigungsvorrichtungen entlang der Länge des Querrahmenelements (3) vorliegende Sacklöcher oder Durchgangsbohrungen (9) oder Aufnahmebauteile zur Aufnahme der Längsstreben (7') sind.

6. Wasser-Gewinnungs-Modul (10) nach zumindest einem der Ansprüche 1 bis 5,
**dadurch gekennzeichnet, dass**
das ein- oder mehrstückige Gewirke (6) einen Shading-Faktor in einem Bereich von 0,5 bis 0,6, bevorzugt in einem Bereich von 0,54 bis 0,58, aufweist.

7. Wasser-Gewinnungs-Modul (10) nach zumindest einem der Ansprüche 1 bis 6,
**dadurch gekennzeichnet, dass**
das Längsrohr (2'), das an der Verbindungsstelle mit der Auffangrinne (4) die Einmündung (2d) aufweist, unterhalb der Einmündung (2d), eine Wasserentnahmevorrichtung aufweist.

8. Wasser-Gewinnungs-Modul (10) nach zumindest einem der Ansprüche 1 bis 7
**dadurch gekennzeichnet, dass**
die Auffangrinne (4) zu der Einmündung (2d) hin geneigt ist.

9. Wasser-Gewinnungs-Modul (10) nach zumindest einem der Ansprüche 1 bis 8
**dadurch gekennzeichnet, dass**
das Wasser-Gewinnungs-Modul (10) eine Standvorrichtung aufweist, bevorzugt zwei Standfüße (F), die jeweils mit dem Längsrahmenelement und dem Längsrohr (2') oder den beiden Längsrohren (2, 2'), die den Rahmen (1) bilden, an deren der Auffangrinne (4) benachbarten Enden angeordnet sind, und/oder dass die Standvorrichtung über einen Rohrabschnitt, der eine Wasserentnahmevorrichtung aufweist, mit dem Längsrohr (2'), das an der Verbindungsstelle mit der Auffangrinne (4) die Einmündung (2d) aufweist, fluidisch verbunden ist.

10. Modularer Wasserkollektor (100), der zwei oder mehr Wasser-Gewinnungs-Module aufweist,
**dadurch gekennzeichnet, dass**
eines der zwei oder mehr Wasser-Gewinnungs-Module ein Wasser-Gewinnungs-Modul (10) nach Anspruch 9 und das zweite oder weitere Wasser-Gewinnungs-Modul ein Wasser-Gewinnungs-Modul (10) nach einem der Ansprüche 1 bis 8 ist/sind, wobei
die zwei Längsrahmenelemente des Wasser-Gewinnungs-Moduls, das die Standvorrichtung aufweist, über ihr jeweils oberes Ende mit den Längsrahmenelementen des zumindest einen weiteren Wasser-Gewinnungs-Moduls (10) nach einem der Ansprüche 1 bis 8 verbunden sind.

11. Modularer Wasserkollektor (100) nach Anspruch 10,
**dadurch gekennzeichnet, dass**
die Längsrahmenelemente der zwei oder mehr zu dem modularen Wasserkollektor (100) verbundenen Wasser-Gewinnungs-Module (10) Längsrohre (2, 2') sind, die jeweils an zumindest einem Ende als Steckverbinder ausgebildet sind und dass die zwei oder mehr zu dem modularen Wasserkollektor (100) verbundenen Wasser-Gewinnungs-Module (10) über Steckverbindungen miteinander verbunden sind, und wobei jeweils die Krümmungen aller miteinander verbundenen Wasser-Gewinnungs-Module (10) kongruent sind.

12. Wasserkollektor-Feld (1000), das eine Vielzahl von Wasser-Gewinnungs-Modulen aufweist, zur Anordnung auf einer Aufstellfläche,
**dadurch gekennzeichnet, dass**
die Wasser-Gewinnungs-Module Wasser-Gewinnungs-Module (10) nach einem der Ansprüche 1 bis 9 sind, und die Wasser-Gewinnungs-Module in zumindest zwei, zur Aufstellfläche orthogonalen, einen vorbestimmten Ebenenabstand (e) aufweisenden parallelen Ebenen angeordnet sind, wobei sie in einer Ebene nebeneinander mit einem vorbestimmten Grundabstand (d) angeordnet sind und in zwei zueinander benachbarten Ebenen derart zueinander versetzt stehen, dass die Wasser-Gewinnungs-Module (10) einer ersten benachbarten Ebene jeweils zentriert zu den Mittelpunkten des Grundabstands (d) der Wasser-Gewinnungs-Module (10) einer zweiten benachbarten Ebene stehen, und nicht mehr als sechs, bevorzugt drei Ebenen gebildet werden.

13. Wasserkollektor-Feld (1000) nach Anspruch 12,
**dadurch gekennzeichnet, dass**
die Wasser-Gewinnungs-Module (10) in modulare Wasserkollektoren (100) nach den Ansprüchen 10 oder 11 eingebaut sind.

14. Wasserkollektor-Feld (1000) nach Anspruch 12 oder 13,
**dadurch gekennzeichnet, dass**
der Grundabstand (d) in einem Bereich von der Breite (b) des Wasser-Gewinnungs-Moduls (10) minus zehn Prozent der Breite (b) bis zu der Breite (b) des Wasser-Gewinnungs-Moduls (10) plus zehn Prozent der Breite (b) liegt und/oder der Ebenenabstand (e) in einem Bereich von zwei Drittel der Breite (b) des Wasser-Gewinnungs-Moduls (10) minus zehn Prozent von zwei Drittel der Breite (b) bis zu zwei Drittel der Breite (b) des Wasser-Gewinnungs-Moduls (10) plus zehn Prozent von zwei Drittel der Breite (b) liegt.

## Claims

1. A water extraction module (10), formed to separate and collect water from an aerosol in an air flow,
wherein the water extraction module (10) has
- a frame (1) having two longitudinal frame elements and two transverse frame elements, which are connected to one another at connection points, and
- at least one one-piece or multi-piece knitted fabric (6), which is tensioned in the frame (1) over the two transverse frame elements,
**characterised in that**
the two longitudinal frame elements can in each case be connected via at least one of their ends to a longitudinal frame element of a further water extraction module (10), and wherein
- a transverse frame element, which comes to rest at the bottom in a use arrangement of the water extraction module (10), is a collecting channel (4), and
at least one of the two longitudinal frame elements is a longitudinal tube (2'), wherein the at least one longitudinal tube (2') has a mouth (2d) at the connection point with the collecting channel (4),
wherein an upper transverse frame element (3), which comes to rest at the top in the use arrangement of the water extraction module (10), and the collecting channel (4) in each case have a mutually aligned arcuate curvature (K), which extends perpendicularly with respect to a plane (E), which is tensioned by the longitudinal frame elements.

2. The water extraction module (10) according to claim 1,
**characterised in that**
the curvature (K) has a radius of curvature, which lies in a range of at least a width (b) of the water extraction module (10) up to the width (b) of the water extraction module (10) plus ten percent of the width (b).

3. The water extraction module (10) according to claim 1 or 2,
**characterised in that**
the longitudinal frame element and the longitudinal tube (2') or the two longitudinal tubes (2, 2'), which in each case form the frame (1), are in each case formed as plug connector on at least one end.

4. The water extraction module (10) according to at least any one of claims 1 to 3,
**characterised in that**
one or several tensioning struts, which extend through the one-piece or multi-piece knitted fabric (6), are arranged inside the frame (1), wherein the tensioning strut or the tensioning struts are one or several longitudinal strut(s) (7') and/or one or several transverse strut(s) (7),
wherein each longitudinal strut (7')
- is connected to the upper transverse frame element (3) directly or via fastening devices, and/or
- is connected to the collecting channel (4) directly or via fastening devices (5)
and/or
wherein each transverse strut (7) is curved so as to be aligned with the upper transverse frame element (3) and the collecting channel (4) and is preferably connected to the longitudinal frame element and the longitudinal tube (2') or the two longitudinal tubes (2, 2').

5. The water extraction module (10) according to claim 4,
**characterised in that**
the fastening devices are blind holes or through bores (9) or receiving components, which are present along the length of the transverse frame element (3), for receiving the longitudinal struts (7').

6. The water extraction module (10) according to at least any one of claims 1 to 5, **characterised in that**
the one-piece or multi-piece knitted fabric (6) has a shading factor in a range of from 0.5 to 0.6, preferably in a range of from 0.54 to 0.58.

7. The water extraction module (10) according to at least any one of claims 1 to 6, **characterised in that**
the longitudinal tube (2'), which has the mouth (2d) at the connection point with the collecting channel (4), has a water removal device below the mouth (2d).

8. The water extraction module (10) according to at least any one of claims 1 to 7, **characterised in that**
the collecting channel (4) is inclined towards the mouth (2d).

9. The water extraction module (10) according to at least any one of claims 1 to 8, **characterised in that**
the water extraction module (10) has a foot, preferably two feet (F), which, with the longitudinal frame element and the longitudinal tube (2') or the two longitudinal tubes (2, 2'), which form the frame (1), are in each case arranged on the ends thereof, which are adjacent to the collecting channel (4), and/or that the foot is fluidically connected via a tube section, which has a water removal device, to the longitudinal tube (2'), which has the mouth (2d) at the connection point with the collecting channel (4).

10. A modular water collector (100), which has two or more water extraction modules, **characterised in that**
one of the two or more water extraction modules is/are a water extraction module (10) according to claim 9, and the second or further water extraction module is/are a water extraction module (10) according to any one of claims 1 to 8, wherein
the two longitudinal frame elements of the water extraction module, which has the foot, are in each case connected via its respective upper end to the longitudinal frame elements of the at least one further water extraction module (10) according to any one of claims 1 to 8.

11. The modular water collector (100) according to claim 10,
**characterised in that**
the longitudinal frame elements of the two or more water extraction modules (10), which are connected to form the modular water collector (100), are longitudinal tubes (2, 2'), which are in each case formed as plug connectors on at least one end, and that the two or more water extraction modules (10), which are connected to form the modular water collector (100), are connected to one another via plug connections, and wherein the curvatures of all water extraction modules (10), which are connected to one another, are congruent in each case.

12. A water collector field (1000), which has a plurality of water extraction modules, for arrangement on an installation surface,
**characterised in that**
the water extraction modules are water extraction modules (10) according to any one of claims 1 to 9, and the water extraction modules are arranged in at least two parallel planes, which are orthogonal to the installation surface and which have a predetermined plane distance (e), wherein they are arranged next to one another in a plane at a predetermined base distance (d), and are offset to one another in such a way in two planes, which are adjacent to one another, that the water extraction modules (10) of a first adjacent plane in each case stand in a centred manner to the centre points of the base distance (d) of the water extraction modules (10) of a second adjacent plane, and not more than six, preferably three planes are formed.

13. The water collector field (1000) according to claim 12,
**characterised in that**
the water extraction modules (10) are installed in modular water collectors (100) according to claims 10 or 11.

14. The water collector field (1000) according to claim 12 or 13,
**characterised in that**
the base distance (d) lies in a range of the width (b) of the water extraction module (10) minus ten percent of the width (b) up to the width (b) of the water extraction module (10) plus ten percent of the width (b) and/or the plane distance (e) lies in a range of two thirds of the width (b) of the water extraction module (10) minus ten percent of two thirds of the width (b) up to two thirds of the width (b) of the water extraction module (10) plus ten percent of two thirds of the width (b).

## Revendications

1. Module de récupération d'eau (10), conçu pour séparer et collecter de l'eau d'un aérosol dans un flux d'air,
le module de récupération d'eau (10) présentant
- un cadre (1) qui comprend deux éléments de cadre longitudinaux et deux éléments de cadre transversaux qui sont reliés les uns aux autres à des points de liaison, et
- au moins un tissu à mailles (6) en une ou plusieurs pièces, qui est tendu sur les deux éléments de cadre transversaux dans le cadre (1),
**caractérisé en ce que**
les deux éléments de cadre longitudinaux peuvent être reliés chacun par au moins une de leurs extrémités à un élément de cadre longitudinal d'un autre module de récupération d'eau (10), et
- un élément de cadre transversal se trouvant en bas dans une disposition d'utilisation du module de récupération d'eau (10) étant un caniveau collecteur (4) et au moins l'un des deux éléments de cadre longitudinaux étant un tube longitudinal (2'), ledit au moins un tube longitudinal (2') présentant une jonction (2d) au niveau du point de liaison avec le caniveau collecteur (4),
un élément de cadre transversal supérieur (3) se trouvant en haut dans la disposition d'utilisation du module de récupération d'eau (10) et le caniveau collecteur (4) présentant chacun une courbure en forme d'arc (K) alignée l'une par rapport à l'autre et s'étendant perpendiculairement par rapport à un plan (E) qui est tendu par les deux éléments de cadre longitudinaux.

2. Module de récupération d'eau (10) selon la revendication 1,
**caractérisé en ce que**
la courbure (K) présente un rayon de courbure qui se situe dans une plage allant d'au moins une largeur (b) du module de récupération d'eau (10) jusqu'à la largeur (b) du module de récupération d'eau (10) plus dix pour cent de la largeur (b).

3. Module de récupération d'eau (10) selon la revendication 1 ou 2,
**caractérisé en ce que**
l'élément de cadre longitudinal et le tube longitudinal (2') ou les deux tubes longitudinaux (2, 2') formant respectivement le cadre (1), sont réalisés sous forme de connecteurs chacun à au moins une extrémité.

4. Module de récupération d'eau (10) selon au moins l'une des revendications 1 à 3, **caractérisé en ce que**
à l'intérieur du cadre (1) sont disposées une ou plusieurs entretoises de serrage qui s'étendent à travers le tissu à mailles (6) en une ou plusieurs pièces, la ou les entretoises de serrage étant une ou plusieurs entretoises longitudinales (7') et/ou une ou plusieurs entretoises transversales (7),
chaque entretoise longitudinale (7')
- étant reliée à l'élément de cadre transversal supérieur (3) directement ou par des dispositifs de fixation, et/ou
- étant reliée au caniveau collecteur (4) directement ou par des dispositifs de fixation (5)
et/ou
chaque entretoise (7) étant courbée en alignement avec l'élément de cadre transversal supérieur (3) et le caniveau collecteur (4) et étant préférablement reliée à l'élément de cadre longitudinal et au tube longitudinal (2') ou aux deux tubes longitudinaux (2, 2').

5. Module de récupération d'eau (10) selon la revendication 4,
**caractérisé en ce que**
les dispositifs de fixation sur la longueur de l'élément de cadre transversal (3) sont des trous borgnes ou des trous traversants (9) présents ou des éléments de réception pour recevoir les entretoises longitudinales (7').

6. Module de récupération d'eau (10) selon au moins l'une des revendications 1 à 5, **caractérisé en ce que**
le tissu à mailles (6) en une ou plusieurs pièces présente un facteur d'ombre dans une plage de 0,5 à 0,6, préférablement dans une plage de 0,54 à 0,58.

7. Module de récupération d'eau (10) selon au moins l'une des revendications 1 à 6, **caractérisé en ce que**
le tube longitudinal (2') qui présente la jonction (2d) au point de liaison avec le caniveau collecteur (4), présente un dispositif de prélèvement d'eau en dessous de la jonction (2d).

8. Module de récupération d'eau (10) selon au moins l'une des revendications 1 à 7, **caractérisé en ce que**
le caniveau collecteur (4) est incliné vers la jonction (2d).

9. Module de récupération d'eau (10) selon au moins l'une des revendications 1 à 8, **caractérisé en ce que**
le module de récupération d'eau (10) présente un dispositif de support, préférablement deux pieds de support (F) qui sont disposés respectivement avec l'élément de cadre longitudinal et le tube longitudinal (2') ou les deux tubes longitudinaux (2, 2') formant le cadre (1), à leurs extrémités adjacentes au caniveau collecteur (4), et/ou **en ce que** le dispositif de support est relié fluidiquement au tube longitudinal (2') qui présente la jonction (2d) au point de liaison avec le caniveau collecteur (4), par le biais d'une section de tube qui présente un dispositif de prélèvement d'eau.

10. Collecteur d'eau modulaire (100) comprenant deux ou plusieurs modules de récupération d'eau,
**caractérisé en ce que**
l'un des deux ou plusieurs modules de récupération d'eau est un module de récupération d'eau (10) selon la revendication 9 et le deuxième module de récupération d'eau ou plus est un module de récupération d'eau (10) selon l'une des revendications 1 à 8,
les deux éléments de cadre longitudinaux du module de récupération d'eau comprenant le dispositif de support étant reliés par leur extrémité supérieure respective aux éléments de cadre longitudinaux du au moins un autre module de récupération d'eau (10) selon l'une des revendications 1 à 8.

11. Collecteur d'eau modulaire (100) selon la revendication 10,
**caractérisé en ce que**
les éléments de cadre longitudinaux des deux ou plusieurs modules de récupération d'eau (10) reliés au collecteur d'eau modulaire (100), sont des tubes longitudinaux (2, 2') qui sont réalisés sous la forme de connecteurs chacun à au moins une extrémité et **en ce que** les deux ou plusieurs modules de récupération d'eau (10) reliés au collecteur d'eau modulaire (100) sont reliés entre eux par des connecteurs, et les courbures de tous les modules de récupération d'eau (10) reliés entre eux étant respectivement congruentes.

12. Panneau de collecteur d'eau (1000) présentant un grand nombre de modules de récupération d'eau, à disposer sur une surface d'installation,
**caractérisé en ce que**
les modules de récupération d'eau sont des modules de récupération d'eau (10) selon l'une des revendications 1 à 9, et **en ce que** les modules de récupération d'eau sont disposés dans au moins deux plans parallèles orthogonaux par rapport à la surface d'installation et présentant une distance entre les plans (e) prédéterminée, ces derniers étant disposés les uns à côté des autres dans un plan avec une distance de base (d) prédéterminée et étant décalés les uns par rapport aux autres dans deux plans adjacents l'un à l'autre de telle manière à ce que les modules de récupération d'eau (10) d'un premier plan adjacent soient respectivement centrés par rapport aux points médians de la distance de base (d) des modules de récupération d'eau (10) d'un deuxième plan adjacent, et à ce que pas plus de six, préférablement trois plans sont formés.

13. Panneau de collecteur d'eau (1000) selon la revendication 12,
**caractérisé en ce que**
les modules de récupération d'eau (10) sont intégrés dans des collecteurs d'eau modulaires (100) selon les revendications 10 ou 11.

14. Panneau de collecteur d'eau (1000) selon la revendication 12 ou 13,
**caractérisé en ce que**
la distance de base (d) se situe dans une plage allant de la largeur (b) du module de récupération d'eau (10) moins dix pour cent de la largeur (b) jusqu'à la largeur (b) du module de récupération d'eau (10) plus dix pour cent de la largeur (b) et/ou **en ce que** la distance entre les plans (e) se situe dans une plage allant des deux tiers de la largeur (b) du module de récupération d'eau (10) moins dix pour cent allant des deux tiers de la largeur (b) jusqu'aux deux tiers de la largeur (b) du module de récupération d'eau (10) plus dix pour cent des deux tiers de la largeur (b).
